# EUROPEAN PATENT SPECIFICATION

(11) **EP 3 951 518 B1**
(45) Date of publication and mention of the grant of the patent: **02.09.2026**
(21) Application number: 20779412.4
(22) Date of filing: 18.02.2020
(51) Int. Cl.: G05B 19/05, G06F 21/60, G06F 12/14

(54) **CONTROL SYSTEM, SECURITY DEVICE, AND METHOD**
STEUERUNGSSYSTEM, SICHERHEITSVORRICHTUNG UND VERFAHREN
SYSTÈME DE COMMANDE, DISPOSITIF DE SÉCURITÉ, ET PROCÉDÉ

(30) Priority: 28.03.2019 JP 2019063354
(43) Date of publication of application: 09.02.2022
(73) Proprietor: OMRON Corporation, Shiokoji-dori, Shimogyo-Ku Kyoto-shi Kyoto 600-8530 (JP)
(72) Inventor: KATAOKA, Hitoshi, Kyoto-shi, Kyoto 600-8530 (JP); NAGATA, Yuta, Kyoto-shi, Kyoto 600-8530 (JP)
(74) Representative: Becker, Eberhard
(86) International application number: PCT/JP2020/006266
(87) International publication number: WO 2020/195348

(56) References cited:
- EP-B1- 1 215 547
- CN-C- 100 367 144
- JP-A- 2004 164 491
- JP-A- 2009 263 869
- JP-A- 2015 152 996
- JP-A- 2015 152 996
- US-A1- 2015 154 031

## Description

### BACKGROUND

### Technical Field

This disclosure relates to a control system and a method of setting security of a program related to control which is executed by a control device.

### Description of Related Art

An environment for connecting a factory automation (FA) control device to the Internet or a cloud terminal is provided. In this environment, regarding the connection of the control device to terminals or networks outside the factory, security measures including dealing with various incidents such as technology leakage are implemented.

In addition, at the factory, incidents such as unauthorized duplication or unauthorized removal of various data including the program of the control device are dealt with by permitting only authorized persons to enter and exit by the entry/exit control. Regarding this point, in Patent Document 1 (Japanese Laid-Open No. H6-110512), in order to prevent unauthorized duplication of the sequence program, the programmable controller is provided with an encryption means for encrypting the sequence program and storing it in the ROM, a decryption means for decrypting the information stored in the ROM and executing it by a processor, and a key setting means for setting an encryption key and a decryption key at the time of encryption and decryption. In Patent Document 2 (JP2015152996A), a printer storing fiscal data is provided and including: a storage section storing a start program and an encrypted main program; a first control section starting by the start program and performing control of the printer in accordance with a decoded main program after the encrypted main program is decoded; and a second control section decoding the encrypted main program, transmitting the decoded main program to the first control section and consisting of a smart card. In Patent Document 3 (US2015/154031A1), the embodiments provided store data in read-protected storage for use by firmware and then transfer the data or data related to that stored data into a secure execution environment for use during normal platform operation. The read-protected storage is readable only between a time period after platform reset but before the read-protected storage is locked prior to the operating system being loaded. This read-protected storage is locked prior to executing any untrusted code in normal system memory so that the data in the read-protected storage is not exposed to malicious code execution. In Patent Document 4 (EP1215547B1), the access to control data in a run-time system is configured more flexibly where the project data from a control program and the current values from a machine to be controlled are stored in the run-time system in the XML or HTML format. The data can be made available independent of location and for standard browsers via a web server integrated into the run-time system. In Patent Document 5 (CN100367144C), methods are provided and systems are arranged to provide, an application to be executed on a device, the device being arranged with a secure environment to which access is strictly controlled by a device processor.

### Related Art

### Patent Document

[Patent Document 1] Japanese Laid-Open No. H6-110512

### SUMMARY

### Technical Problem

In Patent Document 1, since the key is also stored in the programmable controller like the sequence program, if the key is stolen, the program is easily decrypted and duplicated.

The disclosure provides a control system, a security device, and a method capable of preventing unauthorized duplication of a program related to control stored in a control device.

### Solution to the Problem

The invention is set out in the appended set of claims. Independent claim 1 defines a control system with a security device according to the invention. Independent claim 8 defines a method of setting security according to the invention.

The following disclosure serves a better understanding of the present invention. A control system according to the disclosure includes: a control device that executes a program related to control of a control target; and a security device capable of communicating with the control device. The security device includes: a key storage part that stores a key; and a decryption part that performs decryption with the key on the program that has been encrypted. When the program is executed, the decryption is performed, and a decrypted program is transferred to the control device. The control device includes a volatile storage part that stores the decrypted program transferred from the security device.

According to the above disclosure, the time when the decrypted program is stored in the non-volatile storage part provided in the control device is limited to the time when the control program is executed by the control device. Therefore, it is possible to prevent unauthorized duplication of the decrypted program of the control device by a third party.

Further, since the key for decryption is stored in the security device different from the control device, a third party needs to acquire the security device different from the control device in order to acquire the key. Therefore, it is possible to prevent unauthorized duplication of the key, and it is possible to make unauthorized duplication of the above-described decrypted program using the key more difficult.

A security device according to the disclosure is a security device capable of communicating with a control device that executes a program related to control of a control target. The control device includes a volatile storage part that stores a program transferred from the security device. The security device includes: a key storage part that stores a key; and a decryption part that performs decryption with the key on a program that has been encrypted. When the program is executed, the decryption is performed, and a decrypted program is transferred to the control device.

According to the above disclosure, the time when the decrypted program is stored in the non-volatile storage part provided in the control device is limited to the time when the control program is executed by the control device. Therefore, it is possible to prevent unauthorized duplication of the decrypted program of the control device by a third party.

Further, since the key for decryption is stored in the security device different from the control device, a third party needs to acquire the security device different from the control device in order to acquire the key. Therefore, it is possible to prevent unauthorized duplication of the key, and it is possible to make unauthorized duplication of the above-described decrypted program using the key more difficult.

In the above disclosure, the key storage part has a read-protected area in which reading by a device other than the security device is prohibited, and the key is stored in the read-protected area.

According to the above disclosure, since the key is stored in the read-protected area, it is possible to prevent the key from being unauthorizedly acquired and to prevent the decrypted program from being acquired by the unauthorizedly acquired key.

In the above disclosure, the encrypted program is stored in a non-volatile storage part provided in the security device or the control device.

According to the above disclosure, the encrypted program for generating the decrypted program can be stored in the non-volatile storage part provided in the security device or the control device. Therefore, the encrypted program in the non-volatile storage part can be decrypted and then restored to the non-volatile storage part.

In the above disclosure, the security device or the control device is capable of communicating with an external information processing device, and the information processing device transfers the encrypted program to the security device or the control device.

According to the above disclosure, the security device or control device can acquire the encrypted program from an external information processing device.

In the above disclosure, the security device is capable of communicating with an external information processing device, and the security device includes: an encryption part that generates the encrypted program; and a first decryption part that decrypts a program which is transferred from the information processing device and is encrypted with a predetermined key. After the program encrypted with the predetermined key is decrypted by the first decryption part, the encryption part generates the encrypted program by performing encryption on the program with the key of the key storage part.

According to the above disclosure, the security device can acquire the encrypted program from the program encrypted with the predetermined key transferred from the information processing device. In this case, since the program transferred from the information processing device is encrypted with a predetermined key and is not a plaintext program, it is possible to prevent unauthorized duplication of the plaintext program during the transfer.

In the above disclosure, after the program encrypted with the predetermined key is decrypted by the first decryption part, the security device holds the program until the encryption by the encryption part is completed.

According to the above disclosure, the security device holds the decrypted program until the encryption part completes the encryption. Therefore, when the encryption cannot be completed, the encryption can be retried using the retained decrypted program.

In the above disclosure, the security device further stores the encrypted program generated by the encryption part in the non-volatile storage part of the security device itself, or transfers the encrypted program to the control device.

According to the above disclosure, the security device can secure the acquisition route of the encrypted program for generating the decrypted program in the security device itself or the control device.

In the above disclosure, the key of the key storage part includes a private key or a common key. Therefore, the keys used for decryption can be diversified.

The disclosure provides a method of setting security of a program related to control which is executed by a control device that controls a target. The control device is capable of communicating with a security device. The method includes: when the program is executed, a step in which the security device performs decryption with a key held by the security device on the program that has been encrypted and then transfers the program to the control device; and a step in which the control device stores the program that has been decrypted and transferred from the security device in a volatile storage part provided in the control device.

According to the above disclosure, the time when the decrypted program is stored in the non-volatile storage part provided in the control device is limited to the time when the control program is executed by the control device. Therefore, it is possible to prevent unauthorized duplication of the decrypted program of the control device by a third party.

Further, since the key for decryption is stored in the security device different from the control device, a third party needs to acquire the security device different from the control device in order to acquire the key. Therefore, it is possible to prevent unauthorized duplication of the key, and it is possible to prevent unauthorized duplication of the above-described decrypted program using the key.

### Effects

According to the disclosure, it is possible to prevent unauthorized duplication of the program related to control stored in the control device.

### BRIEF DESCRIPTION OF THE DRAWINGS

FIG. 1 is a diagram schematically showing an overall configuration of a network environment 1000 including the control system 1 according to the embodiment.
FIG. 2 is an appearance diagram showing a configuration example of the control system 1 according to the embodiment.
FIG. 3 is a schematic diagram showing a hardware configuration example of the control unit 100 configuring the control system 1 according to the embodiment.
FIG. 4 is a schematic diagram showing a hardware configuration example of the security unit 200 configuring the control system 1 according to the embodiment.
FIG. 5 is a schematic diagram showing a hardware configuration example of the support device 500 that can be connected to the control system 1 according to the embodiment.
FIG. 6 is a diagram showing a part of the functions of the control system 1 in association with the support device 500 according to the embodiment.
FIG. 7 is a diagram schematically showing an example of a flowchart of processing including the decryption processing according to the embodiment.
FIG. 8 is a diagram schematically showing a flow of data between the devices in the processing of FIG. 7.
FIG. 9 is a diagram schematically showing another example of a flowchart of processing including the decryption processing according to the embodiment.
FIG. 10 is a diagram schematically showing a flow of data between the devices in the processing of FIG. 9.
FIG. 11 is a diagram schematically showing still another example of a flowchart of processing including the decryption processing according to the embodiment.
FIG. 12 is a diagram schematically showing a flow of data between the devices in the processing of FIG. 11.
FIG. 13 is a diagram schematically showing a configuration of the control system 1 independent of the support device 500 according to the embodiment.
FIG. 14 is a diagram showing an example of a flowchart of the startup processing of the control system 1 according to the embodiment.

### DESCRIPTION OF THE EMBODIMENTS

Embodiments will be described in detail below with reference to the drawings. The same or corresponding parts in the drawings are denoted by the same reference numerals, and descriptions thereof will not be repeated.

### <A. Application Example>

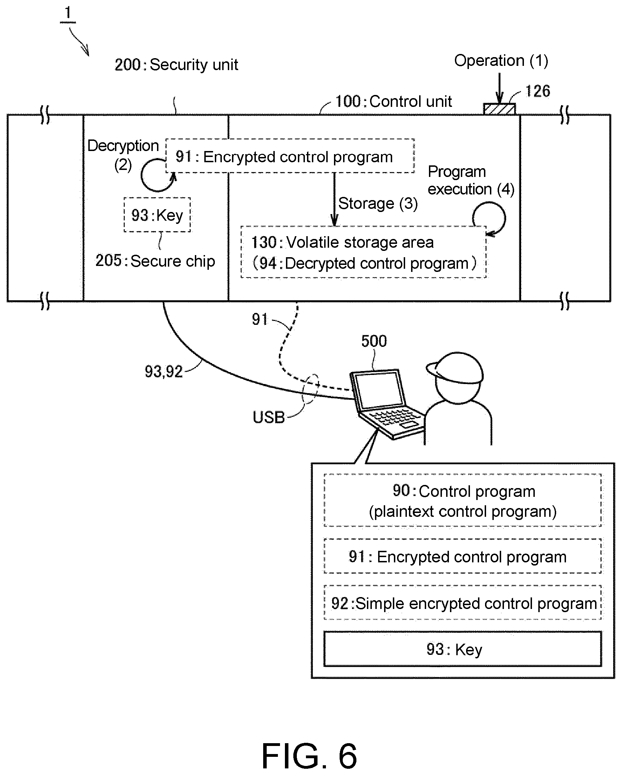

First, an example of the scenario in which the disclosure is applied will be described. FIG. 6 is a diagram showing a part of the functions of a control system 1 in association with a support device 500 according to the embodiment. In FIG. 6, this function indicates a function for setting security related to a control program so as to prevent unauthorized duplication of the control program related to control of a target.

With reference to FIG. 6, the control system 1 includes a control unit 100 which is an embodiment of the "control device" and a security unit 200 which is an embodiment of the "security device." The security unit 200 is connected to the control unit 100 via an internal bus (for example, a PCI Express bus). The security unit 200 may be mounted as a separate externally attachable unit that is detachably connected to the control unit 100 by some methods, instead of being connected to the control unit 100 via an internal bus.

The control unit 100 includes, for example, a programmable logic controller (PLC). The control unit 100 executes a program (hereinafter referred to as a control program) related to the control of the control target. The control program includes programs such as IO refresh and control calculation processing that exchange signals with the equipment and devices and the various devices (sensors, actuators, and the like) disposed therein, which are the control targets. Specifically, in the IO refresh, a command value calculated by the control unit 100 is output to the control target, or an input value from the control target is collected. In the control calculation processing, for example, the command value and the control amount based on the input value collected by the IO refresh are calculated. A control program having such a function is also an example of a "user program" including a program created by a user or a development company according to the required specifications of the control target.

The security unit 200 sets the security of the control system 1, more specifically, of the control unit 100. This security setting includes a setting for preventing unintended duplication of the control program, that is, unauthorized duplication of the control program.

The control system 1 may further include a support device 500 that can be operated by the user. The support device 500 corresponds to an embodiment of an external "information processing device" and provides a support tool for assisting the user in operating the control system 1. The support device 500 is detachably connected to the control unit 100 or the security unit 200 by universal serial bus (USB). For this USB communication, a communication protocol for performing user authentication may be adopted in order to ensure the security of communication.

The support device 500 includes a storage part that stores a plaintext control program 90, a key 93 used for encrypting or decrypting the control program 90, and an encrypted control program 91 in which the control program 90 is encrypted with the key 93. In this embodiment, the key 93 is provided as a common key for encryption and decryption. In the embodiment, the form of the key 93 is not limited to the above, and for example, a form in which encryption is performed with a public key and decryption is performed with a private key can be applied.

The security unit 200 receives the key 93 transferred from the support device 500 and stores it in a memory 207 (to be described later) of a secure chip 205 included in the security unit 200. The secure chip 205 can be implemented using a dedicated hardware circuit, such as an application specific integrated circuit (ASIC) or a field-programmable gate array (FPGA). The secure chip 205 is a chip mounted directly on the substrate of the security unit 200, and is an embodiment of a "key storage part" that stores the key 93 in a storage area that is prohibited from being read by a device other than the security unit 200, that is, a storage area that cannot be read from an external device.

When the control unit 100 is started and the control program is executed, the security unit 200 generates a decrypted control program 94 by decrypting the encrypted control program 91 stored in the control unit 100 or the security unit 200 with the key 93 (processing (2)), and transfers the generated decrypted control program 94 to the control unit 100. The control unit 100 stores the decrypted control program 94 transferred from the security unit 200 in a volatile storage area 130, which is an embodiment of the "volatile storage part" (storage (3)). The control unit 100 executes the decrypted control program 94 in the volatile storage area 130 (program execution (4)).

In this way, the security unit 200 generates the decrypted control program 94 corresponding to the control program 90 by decrypting with the key 93 the encrypted control program 91 in which the plaintext control program 90 is encrypted.

In the control system 1 described above, the key 93 for decryption is stored in the security unit 200, which is a unit separate from the control unit 100, and further in the secure chip 205 of the security unit 200; therefore, it becomes virtually impossible to read the key 93 from an external device. Therefore, a third party cannot acquire the key 93, and even if the encrypted control program 91 can be acquired, the decrypted control program 94 cannot be acquired.

Further, decryption of the encrypted control program 91 (processing (2)) is performed only when the control program is started, and the decrypted control program 94 is stored in the volatile storage area 130 in which the stored contents are erased when the power supply of the control unit 100 is turned off and the power supply is cut off; therefore, the opportunity for a third party to read (copy) the decrypted control program 94 from the volatile storage area 130 is limited.

Therefore, the control system 1 makes it impossible for a third party to unauthorizedly duplicate the decrypted control program 94 corresponding to the control program 90.

Further, the control unit 100 includes a DIP switch 126 provided so that the user can operate it from the outside in order to set a "secure boot mode." The user switches the DIP switch 126 from OFF to ON when setting the "secure boot mode" for the control system 1, and leaves the DIP switch 126 OFF when not setting. When each unit of the control system 1 is started by turning on the power from a power supply unit 450 (to be described later) (power supply starts), the control unit 100 proceeds to the "secure boot mode" in response to the operation of the DIP switch 126 (operation (1) of FIG. 6). In the "secure boot mode," the security unit 200 sets an environment in which the control program can be executed in the control unit 100 by performing the decryption processing (processing (2) and storage (3)) in cooperation with the control unit 100.

As a result, the control unit 100 acquires the decrypted control program 94 only when the secure boot mode is set. As a result, it is possible to reduce the possibility that a third party unauthorizedly acquires or unauthorizedly duplicates the decrypted control program 94.

Further, in the control system 1, the encrypted control program 91 is generated in the security unit 200. In this case, the security unit 200 generates the encrypted control program 91 by performing encryption processing with the key 93 in the secure chip 205 based on a simple encrypted control program 92 transferred from the support device 500. In this way, even when the security unit 200 generates the encrypted control program 91, the control program transferred from the support device 500 to the security unit 200 is not a plaintext control program but the simple encrypted control program 92; therefore, the plaintext control program 90 can be prevented from being unauthorizedly duplicated during the transfer.

Hereinafter, a more specific application example of the embodiment will be described.

### <B. Network Configuration of the Control System 1>

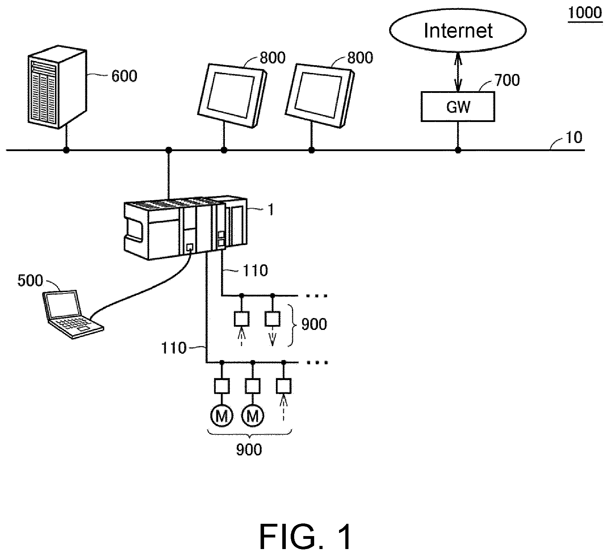

FIG. 1 is a diagram schematically showing an overall configuration of a network environment 1000 including the control system 1 according to the embodiment. With reference to FIG. 1, the network environment 1000 includes the control system 1, a server device 600, a display device 800, and a gateway 700, which are connected via a network 10. The network 10 is connected to the Internet, which is an external network, via the gateway 700. Further, the control system 1 connects a control target 900 including the equipment and devices of the field and various devices (sensors, actuators, and the like) disposed therein via a field network 110.

A bus or network that performs periodic communication, by which data arrival time is guaranteed, may serve as the field network 110. EtherCAT (registered trademark) may be adopted as a bus or network that performs such periodic communication. Further, for example, Ethernet (registered trademark) or EtherNet/IP (registered trademark), which is a general network protocol, may be adopted as the network 10.

A display device 800 receives an operation from the user and outputs a command and the like corresponding to the user operation to the control system 1, and graphically displays a calculation result and the like in the control system 1.

It is assumed that a database system, a manufacturing execution system (MES), or the like serves as the server device 600. The manufacturing execution system acquires information from manufacturing devices or equipment of the control target to monitor and manage the entire production, and can handle order information, quality information, shipping information, and the like. The disclosure is not limited to the above, and a device that provides an information system service (processing of acquiring various information from a control target and performing macro or micro analysis) may be connected to the network 10.

In the embodiment, the control unit 100 executes a service program 97 (to be described later) in order to cause the display device 800 and the server device 600 to perform various kinds of service processing described above.

The gateway 700 executes protocol conversion between the network 10 and the external network (Internet) and executes processing as a firewall.

### <C. Appearance of the Control System 1>

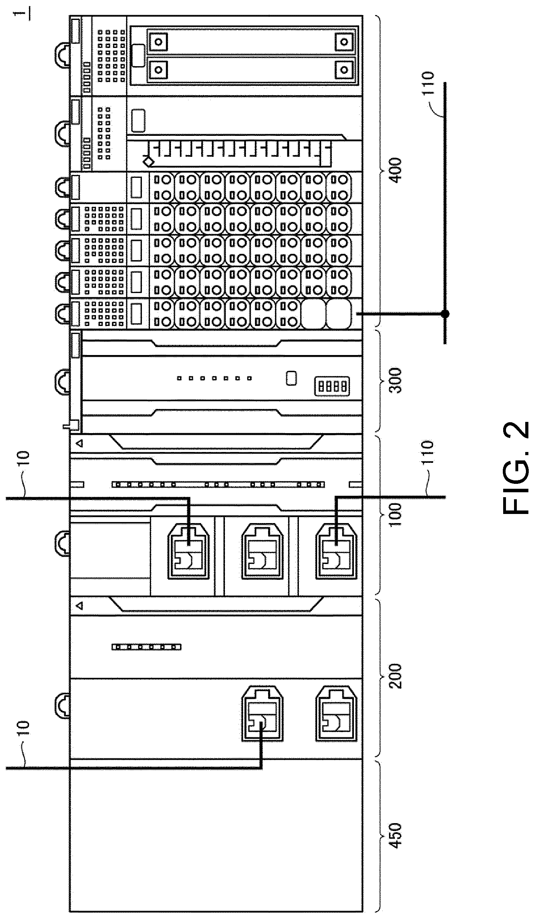

FIG. 2 is an appearance diagram showing a configuration example of the control system 1 according to the embodiment. With reference to FIG. 2, the control system 1 includes the control unit 100, the security unit 200, a safety unit 300, one or more functional units 400, and the power supply unit 450.

The control unit 100 and the security unit 200 are connected via the above-described PCI Express bus or the like, and the control unit 100 and the safety unit 300 and the one or more functional units 400 are connected via an internal bus.

The safety unit 300, independently of the control unit 100, executes a control calculation for realizing a safety function related to the control target. The functional units 400 provide various functions for realizing control of various control targets by the control system 1. The functional units 400 may typically include an I/O unit, a safety I/O unit, a communication unit, a motion controller unit, a temperature control unit, a pulse counter unit, and the like. For example, a digital input (DI) unit, a digital output (DO) unit, an analog output (AI) unit, an analog output (AO) unit, a pulse catch input unit, a composite unit obtained by mixing a plurality of types, and the like may be used as the I/O unit. The safety I/O unit is in charge of I/O processing related to the safety control.

The power supply unit 450 supplies power of a predetermined voltage to each unit configuring the control system 1.

### <D. Hardware Configuration Example of Each Unit>

Next, a hardware configuration example of each unit configuring the control system 1 according to the embodiment will be described.

### (d1. Control Unit 100)

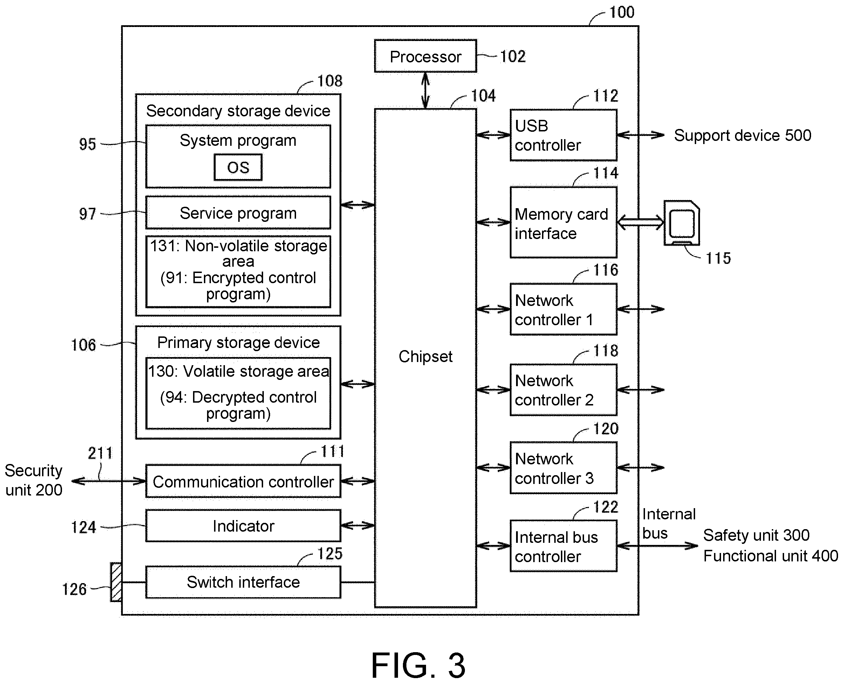

FIG. 3 is a schematic diagram showing a hardware configuration example of the control unit 100 configuring the control system 1 according to the embodiment. With reference to FIG. 3, the control unit 100 includes, as main components, a processor 102, such as a central processing unit (CPU) or a graphical processing unit (GPU), a chipset 104, a primary storage device 106, a secondary storage device 108, a communication controller 111, a universal serial bus (USB) controller 112, a memory card interface 114, network controllers 116, 118, and 120, an internal bus controller 122, an indicator 124, and a switch interface 125.

The processor 102 realizes various kinds of processing including control calculation and service processing by reading various programs stored in the secondary storage device 108, and expanding them in the primary storage device 106 to execute them. The chipset 104 realizes the processing of the control unit 100 as a whole by mediating the data exchange between the processor 102 and each component.

The primary storage device 106 includes a volatile storage device such as a dynamic random access memory (DRAM) or a static random access memory (SRAM). At least a part of these volatile storage devices configures the volatile storage area 130 for storing the decrypted control program 94.

The secondary storage device 108 typically includes, for example, a non-volatile storage device such as a hard disk drive (HDD) or a solid state drive (SSD), a read only memory (ROM), an erasable programmable read only memory (EPROM), and an electrically erasable programmable read-only memory (EEPROM). At least a part of these non-volatile storage devices configures a non-volatile storage area 131 for storing the encrypted control program 91.

The secondary storage device 108 further stores user programs such as a system program 95 including an operating system (OS) and the service program 97. The system program 95 provides a program execution environment for operating user programs such as the decrypted control program 94 and the service program 97.

The communication controller 111 is in charge of data exchange with the security unit 200. For example, a communication chip corresponding to the bus 211 such as PCI Express can be adopted as the communication controller 111.

The USB controller 112 is in charge of data exchange with any information processing device including the support device 500 via USB connection.

The memory card interface 114 is configured to allow a memory card 115 to be attached thereto or detached therefrom, and is capable of writing data such as user programs or various settings to the memory card 115 or reading data such as the corresponding programs or various settings from the memory card 115.

Each of the network controllers 116, 118, and 120 is in charge of data exchange with any device via the network. Industrial network protocols such as EtherCAT (registered trademark), EtherNet/IP (registered trademark), DeviceNet (registered trademark), CompoNet (registered trademark) or the like may be adopted as the network controllers 116, 118, and 120.

The internal bus controller 122 is in charge of data exchange with the safety unit 300 or the one or more functional units 400 configuring the control system 1 via the internal bus. A manufacturer-specific communication protocol may be used for this internal bus, or a communication protocol that is the same as or compliant with any of the industrial network protocols may be used.

The indicator 124 notifies the operation state of the control unit 100 and the like, and is configured by one or more light emitting diodes (LEDs) disposed on the surface of the unit.

FIG. 3 shows a configuration example in which the necessary functions are provided by the processor 102 executing the programs. However, a part or all of the provided functions may be implemented by using a dedicated hardware circuit, such as an application specific integrated circuit (ASIC), a field-programmable gate array (FPGA), and the like. Alternatively, the main parts of the control unit 100 may be realized by using hardware according to a general-purpose architecture, such as an industrial personal computer based on a general-purpose personal computer. In this case, a plurality of OSs for different uses may be executed in parallel by using a virtualization technique, and the required applications may be executed on the respective OSs.

### (d2. Security Unit 200)

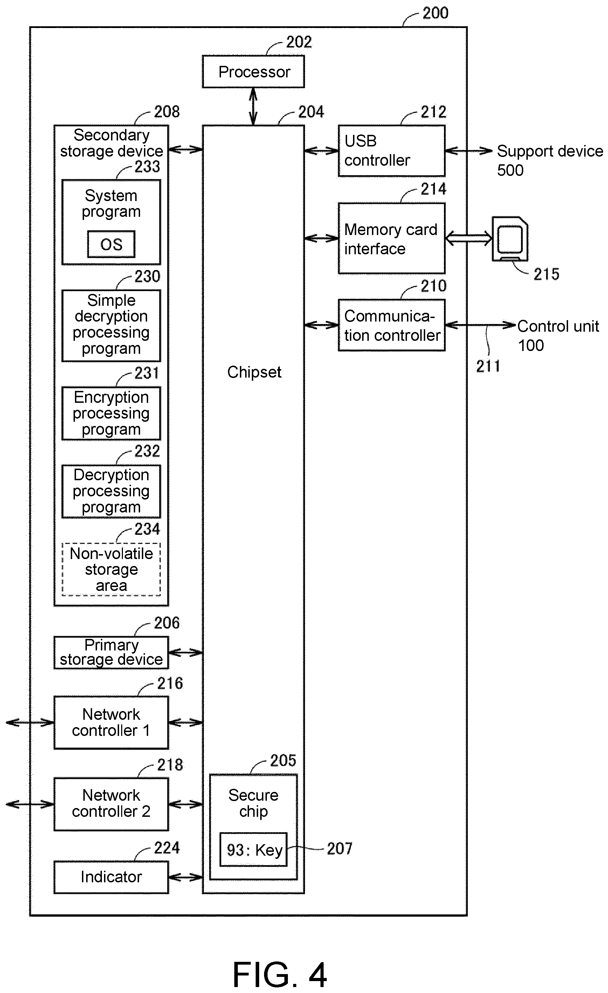

FIG. 4 is a schematic diagram showing a hardware configuration example of the security unit 200 configuring the control system 1 according to the embodiment. With reference to FIG. 4, the security unit 200 includes, as main components, a processor 202, such as a CPU or a GPU, a chipset 204, a primary storage device 206 including a volatile storage area, a secondary storage device 208 including a non-volatile storage area 234, a communication controller 210, a USB controller 212, a memory card interface 214, network controllers 216 and 218, and an indicator 224. Since the primary storage device 206 and the secondary storage device 208 can be configured in the same manner as the primary storage device 106 and the secondary storage device 108 of the control unit 100, respectively, the description is not repeated here.

The processor 202 realizes various functions by reading various programs stored in the secondary storage device 208 and expanding them in the primary storage device 206 to execute them. The chipset 204 realizes the processing of the security unit 200 as a whole by mediating the data exchange between the processor 202 and each component. The chipset 204 is configured to include various chips mounted on the substrate, and one of the mounted chips corresponds to the secure chip 205 that stores the key 93.

In addition to a system program 233 including the OS, the secondary storage device 208 stores various processing programs that operate in the execution environment provided by the system program 233. The various processing programs include a simple decryption processing program 230 that decrypts the simple encrypted control program 92, an encryption processing program 231 that encrypts with the key 93 after the simple encrypted control program 92 is decrypted by the simple decryption processing program 230, and a decryption processing program 232 that decrypts the encrypted control program.

The communication controller 210 is in charge of data exchange with the control unit 100. For example, a communication chip corresponding to PCI Express applied to the bus 211 can be adopted as the communication controller 210, in the same manner as the communication controller 210 to the control unit 100.

The USB controller 212 is in charge of data exchange with any information processing device including the support device 500 via USB connection.

The memory card interface 214 is configured to allow a memory card 215 such as an SD card to be attached thereto or detached therefrom, and is capable of writing data such as programs or various settings to the memory card 215 or reading data such as the programs or various settings from the memory card 215.

Each of the network controllers 216 and 218 is in charge of data exchange with any device via the network. The network controllers 216 and 218 may adopt a general-purpose network protocol such as Ethernet.

The indicator 224 notifies the operation state of the security unit 200 and the like, and is configured by one or more LEDs disposed on the surface of the unit.

FIG. 4 shows a configuration example in which the necessary functions are provided by the processor 202 executing the programs. However, a part or all of the provided functions may be implemented by using a dedicated hardware circuit, such as an ASIC, an FPGA, and the like. Alternatively, the main parts of the security unit 200 may be realized by using hardware according to a general-purpose architecture, such as an industrial personal computer based on a general-purpose personal computer. In this case, a plurality of OSs for different uses may be executed in parallel by using a virtualization technique, and the required applications may be executed on the respective OSs.

### <E. Hardware Configuration Example of the Support Device 500>

Next, a hardware configuration example of the support device 500 that can be connected to the control system 1 according to the embodiment will be described.

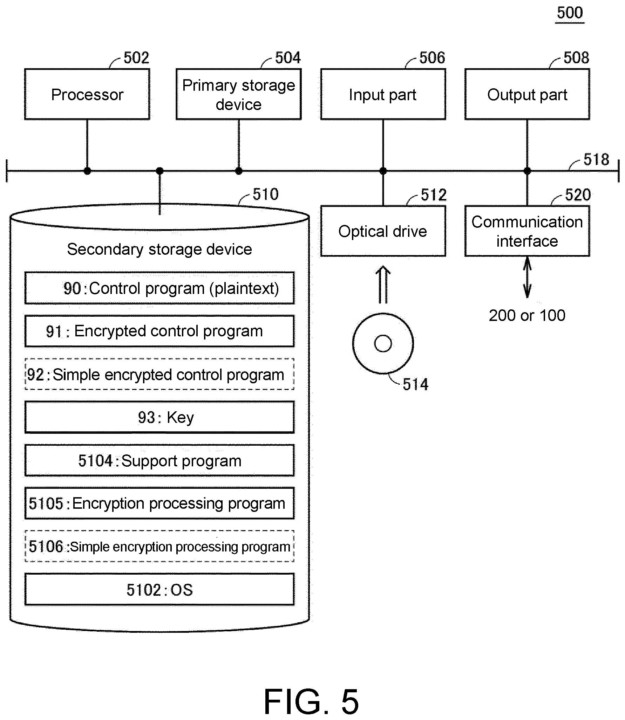

FIG. 5 is a schematic diagram showing a hardware configuration example of the support device 500 that can be connected to the control system 1 according to the embodiment. For example, the support device 500 is realized by using hardware according to a general-purpose architecture, such as a general-purpose personal computer.

With reference to FIG. 5, the support device 500 includes a processor 502, such as a CPU or a GPU, a primary storage device 504, an input part 506, an output part 508, a secondary storage device 510, an optical drive 512, and a communication interface 520. These components are connected via a processor bus 518. Since the primary storage device 504 and the secondary storage device 510 can be configured in the same manner as the primary storage device 106 and the secondary storage device 108 of the control unit 100, respectively, the description is not repeated here.

The processor 502 realizes various kinds of processing by reading various programs (such as an OS 5102 and a support program 5104) stored in the secondary storage device 510 and expanding them in the primary storage device 504 to execute them.

In addition to the OS 5102 for realizing the basic functions, the support program 5104 for providing the functions as the support device 500 is also stored in the secondary storage device 510. By executing the support program 5104 by an information processing device (substantially by the processor 502) that is a computer, the support device 500 according to the embodiment can provide a support tool. The support tool provides a program development environment in the support device 500.

The secondary storage device 510 stores the control program 90 created by the user or the development company according to the required specifications of the control target in the program development environment, and the encrypted control program 91. Further, the secondary storage device 510 stores the key 93 and an encryption processing program 5105. Further, a simple encryption processing program 5106 may be stored in the secondary storage device 510. When the simple encryption processing program 5106 is executed, the secondary storage device 510 may store the simple encrypted control program 92 generated by the corresponding execution. In the embodiment, at least one of the encryption processing program 5105 and the simple encryption processing program 5106 is stored in the secondary storage device 510.

The input part 506 is configured by a keyboard, a mouse, or the like, and receives user operations. The output part 508 is configured by a display, various indicators, a printer, or the like, and outputs a processing result from the processor 502 and the like.

The communication interface 520 exchanges data with the control unit 100 or the security unit 200 included in the control system 1 via any communication medium such as USB or Ethernet.

The support device 500 has the optical drive 512. The optical drive 512 reads a program stored in a recording medium 514 (for example, an optical recording medium such as a digital versatile disc (DVD)) from the recording medium 514 and installs it in the secondary storage device 510 or the like.

The support program 5104 or the like executed by the support device 500 may be installed via the computer-readable storage medium 514, or may be installed by downloading from a server device or the like on the network. Further, the function provided by the support device 500 according to the embodiment may be realized by using a part of the modules provided by the OS.

FIG. 5 shows a configuration example in which the functions necessary as the support device 500 are provided by the processor 502 executing the programs. However, a part or all of the provided functions may be implemented by using a dedicated hardware circuit, such as an ASIC, an FPGA, and the like.

In the embodiment, the support device 500 may be removed from the control system 1 while the control system 1 is in operation.

When the encryption processing program 5105 is executed in the support device 500, in the encryption processing, the control program 90 is encrypted with the key 93 (that is, the encrypted control program 91 is generated) and stored in the secondary storage device 510. Further, when the simple encryption processing program 5106 is executed, in the simple encryption processing, the control program 90 is encrypted with a predetermined key for simple encryption (that is, the simple encrypted control program 92 is generated) and stored in the secondary storage device 510.

With reference back to FIG. 6, the support device 500 transfers the encrypted control program 91, the simple encrypted control program 92, and the key 93 of the secondary storage device 510 to the control unit 100 or the security unit 200 included in the control system 1 via the communication interface 520. In this case, the communication interface 520 performs user authentication with the security unit 200, and if the authentication is successful, the transfer of the key 93, the encrypted control program 91, and the simple encrypted control program 92 is permitted. Therefore, the key 93, the encrypted control program 91, and the simple encrypted control program 92 are transferred only to the intended and authorized security unit 200 or control unit 100, and are prevented from being transferred to an unintended third party terminal.

### <F. Decryption Processing>

The decryption processing performed in the secure boot mode will be described. For processing examples, in the decryption processing (processing (2) of FIG. 6), a case where the security unit 200 decrypts the encrypted control program 91 stored in the control unit 100 and a case where the security unit 200 decrypts the encrypted control program 91 stored in the security unit 200 will be described.

### (f1. An Example of Decryption Processing of the Encrypted Control Program 91 of the Control Unit 100)

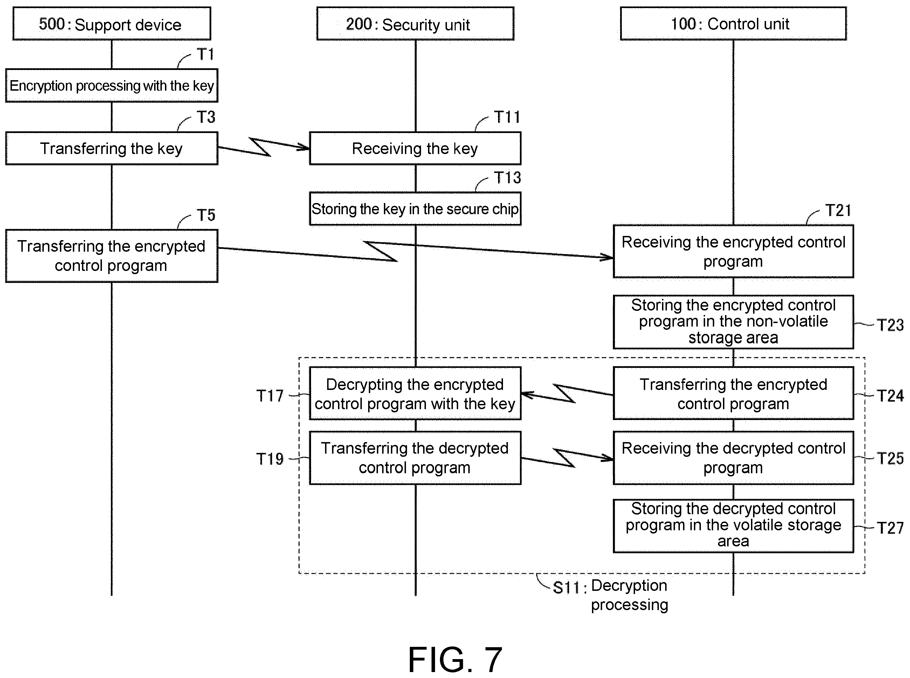

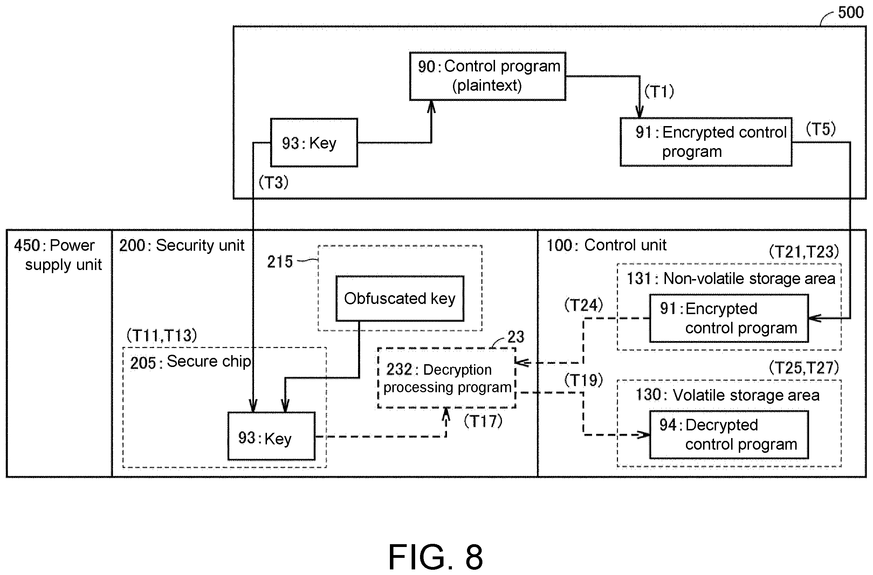

FIG. 7 is a diagram schematically showing an example of a flowchart of processing including the decryption processing according to the embodiment. FIG. 8 is a diagram schematically showing a flow of data between the devices in the processing of FIG. 7. For the sake of description, each part of FIG. 8 is assigned a reference number for related processing in the processing steps T1 to T27 of FIG. 7. With reference to FIGs. 7 and 8, a case where the security unit 200 decrypts the encrypted control program 91 transferred from the support device 500 to the control unit 100 and transfers the decrypted control program 94 to the control unit 100 will be described.

With reference to FIGs. 7 and 8, the support device 500 encrypts the plaintext control program 90 with the key 93 by the encryption processing program 5105, and then transfers it to the control unit 100 (steps T1 and T5). Specifically, the support device 500 generates the encrypted control program 91 by encrypting the plaintext control program 90 with the key 93 by the encryption processing program 5105, and transfers the encrypted control program 91 to the control unit 100 via the communication interface 520. Further, the support device 500 transfers the key 93 of the secondary storage device 510 to the security unit 200 (step T3). At the time of this transfer, the support device 500 performs user authentication with the remote device (the security unit 200 and the control unit 100) by the communication interface 520, and when the authentication is successful, the support device 500 transfers the key 93 and the encrypted control program 91.

The security unit 200 receives the key 93 from the support device 500 (step T11), and stores the received key 93 in the secure chip 205 (T13). Further, the control unit 100 receives the encrypted control program 91 from the support device 500 (step T21), and stores the received encrypted control program 91 in the non-volatile storage area 131 (step T23). Next, the decryption processing (step S11) to be described later is performed.

### (fl-1. Decryption Processing)

The security unit 200 includes a decryption part 23 of FIG. 8 corresponding to a module realized by executing the decryption processing program 232. In the decryption processing, for example, the control unit 100 transfers the encrypted control program 91 of the non-volatile storage area 131 to the security unit 200 in response to a request from the security unit 200 (step T24). The decryption part 23 of the security unit 200 decrypts the encrypted control program 91 received from the control unit 100 with the key 93 of the secure chip 205, and then transfers it to the control unit 100 (step T19). That is, the decryption part 23 generates the decrypted control program 94 by decrypting the encrypted control program 91 with the key 93 (step T17), and transfers the decrypted control program 94 to the control unit 100 (step T19).

The control unit 100 receives the decrypted control program 94 transferred from the security unit 200, and stores the received decrypted control program 94 in the volatile storage area 130 (steps T25 and T27). As a result, the decryption processing (step S11) is completed.

In FIG. 8, the transfer of the encrypted control program 91 and the decrypted control program 94 between the security unit 200 and the control unit 100 in the decryption processing described above is indicated by broken line arrows. Since this transfer can be performed via an internal bus such as PCI Express that connects the security unit 200 and the control unit 100 in the control system 1, it is possible to avoid the risk that the decrypted control program 94 during transfer is exposed to the outside.

Further, for example, even when the control system 1 adopts a device configuration in which the security unit 200 is detachably attached to the control unit 100, unauthorized duplication of the decrypted control program 94 by a third party can be prevented. For example, when the power is turned off and the control unit 100 is removed from the security unit 200, the key 93 remains in the security unit 200, so a third party cannot decrypt the encrypted control program 91 of the removed control unit 100. Further, the key 93 stored in the secure chip 205 cannot be read from an external device. As a result, according to the configurations of FIGs. 7 and 8, it is possible to prevent unauthorized duplication of the decrypted control program 94 by a third party.

### (f2. Another Example of Decryption Processing of the Encrypted Control Program 91 of the Control Unit 100)

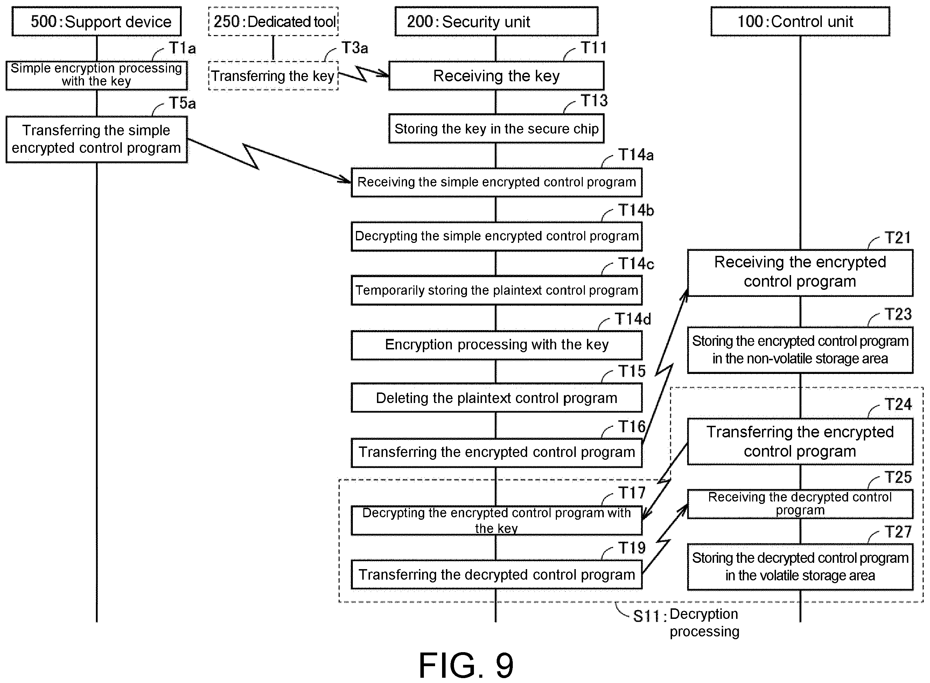

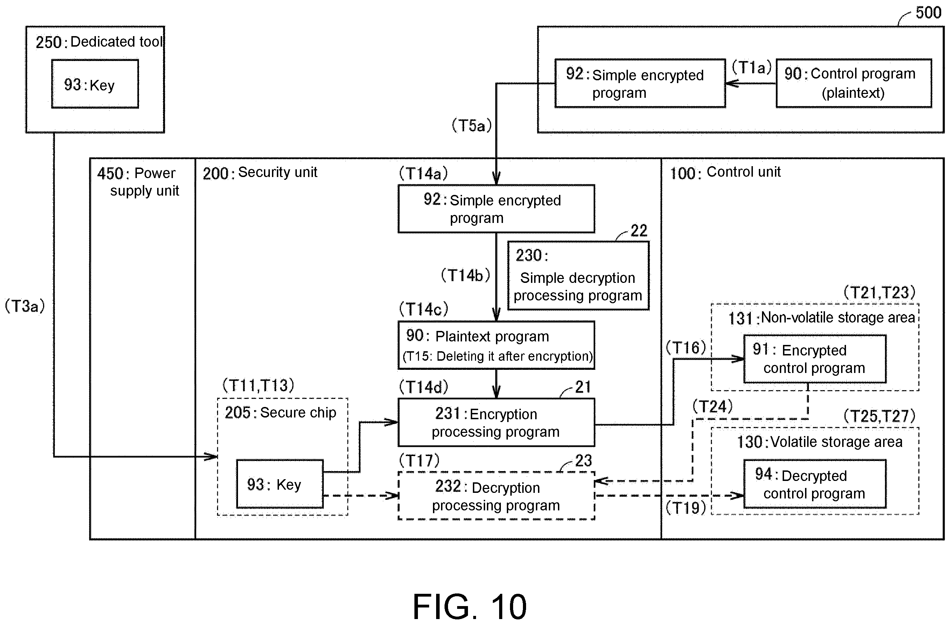

FIG. 9 is a diagram schematically showing another example of a flowchart of processing including the decryption processing according to the embodiment. FIG. 10 is a diagram schematically showing a flow of data between the devices in the processing of FIG. 9. For the sake of description, each part of FIG. 10 is assigned a reference number for related processing in the processing steps T1a to T27 of FIG. 9. With reference to FIGs. 9 and 10, a case where the decrypted control program 94 is generated by the decryption processing from the encrypted control program 91, which is generated by the security unit 200 and transferred to the control unit 100, will be described.

The security unit 200 includes the decryption part 23, a simple decryption part 22 corresponding to a module realized by executing the simple decryption processing program 230, and an encryption part 21 corresponding to a module realized by executing the encryption processing program 231. The simple decryption part 22 is an embodiment of the "first decryption part."

The support device 500 encrypts the plaintext control program 90 with a predetermined simple encryption key by the simple encryption processing program 5106, and then transfers it to the security unit 200 (steps T1a and T5a). That is, the support device 500 generates the simple encrypted control program 92 by encrypting the plaintext control program 90 with the predetermined simple encryption key by the simple encryption processing program 5106 (step T1a), and transfers the simple encrypted control program 92 to the security unit 200 via the communication interface 520 (step T5a). At the time of this transfer, the support device 500 performs user authentication with the remote device (the security unit 200) by the communication interface 520, and when the authentication is successful, the support device 500 transfers the simple encrypted control program 92. In the embodiment, the predetermined simple encryption key is exchanged between the support device 500 and the security unit 200 via user authentication.

Further, the security unit 200 receives the key 93 transferred from a dedicated tool 250 and stores it in the secure chip 205 (steps T3a, T11 and T13). In the embodiment, the dedicated tool 250 is a tool held by an authorized user or a program development company, and is used to store the key 93 in the secure chip 205 at the time of shipment of the security unit 200 or the like.

The security unit 200 generates the encrypted control program 91 by performing encryption processing with the key 93 based on the simple encrypted control program 92 transferred from the support device 500 (steps T14a to T14d).

Specifically, the security unit 200 receives the simple encrypted control program 92 from the support device 500 (step T14a), and the simple decryption part 22 generates the decrypted control program, that is, the plaintext control program 90, by decrypting the received simple encrypted control program 92 with the predetermined simple encryption key, and temporarily stores the generated control program 90 (steps T14b and T14c). The encryption part 21 generates the encrypted control program 91 by encrypting the generated control program 90 with the key 93 (step T14d).

After that, the security unit 200 deletes the temporarily stored plaintext control program 90 (step T15), and transfers the encrypted control program 91 to the control unit 100 (step T16). The control unit 100 receives the encrypted control program 91 from the security unit 200 and stores it in the non-volatile storage area 131 (steps T21 and T23). In this way, since the control program 90 that has been decrypted and temporarily stored is held at least until the encryption by the encryption part 21 is completed, the encryption can be retried while the control program 90 is stored. Further, the temporarily stored plaintext control program 90 may be deleted after the transfer of the encrypted control program 91 to the control unit 100 is completed.

After that, the security unit 200 and the control unit 100 perform the decryption processing of the encrypted control program 91 (steps T17, T19 and T24 to T27). Since this decryption processing is the same as the processing described with reference to FIGs. 7 and 8, the description will not be repeated.

In this way, in the case described in FIGs. 9 and 10 as well, like the case of FIGs. 7 and 8, the decrypted control program 94 can be protected from unauthorized duplication by a third party.

### (f3. Decryption Processing of the Encrypted Control Program 91 of the Security Unit 200)

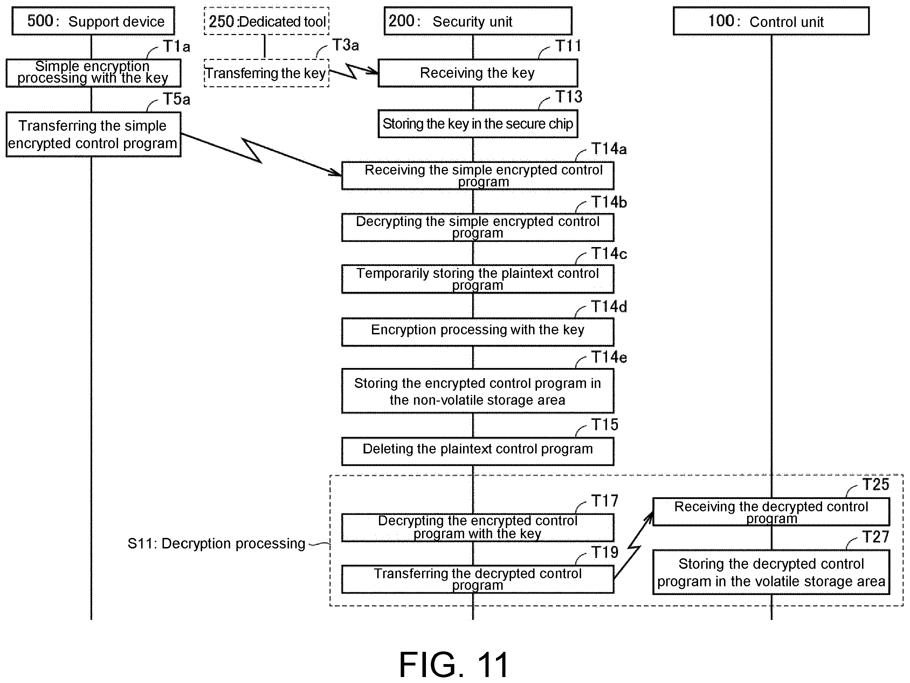

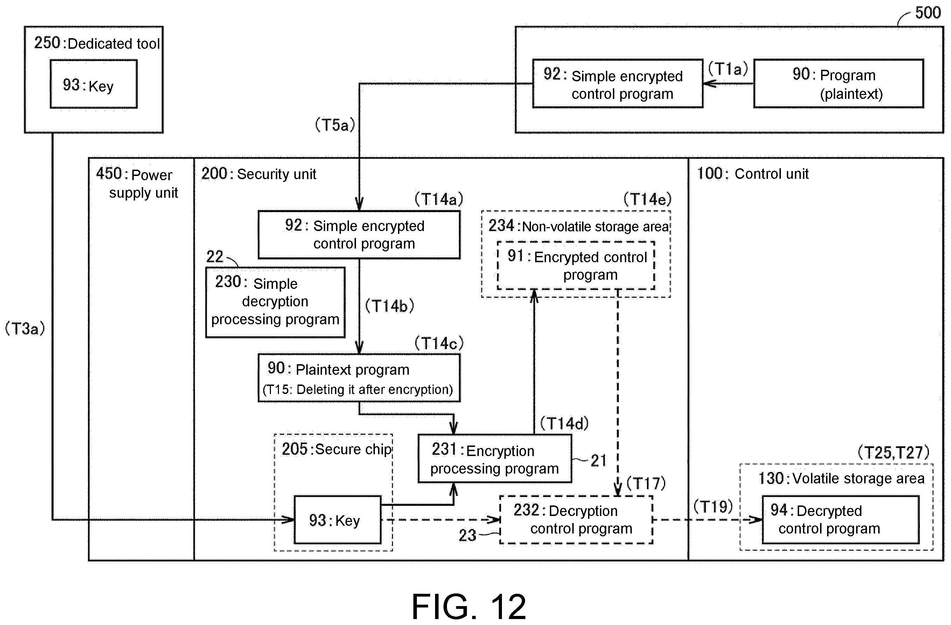

FIG. 11 is a diagram schematically showing still another example of a flowchart of processing including the decryption processing according to the embodiment. FIG. 12 is a diagram schematically showing a flow of data between the devices in the processing of FIG. 11. For the sake of description, each part of FIG. 12 is assigned a reference number for related processing in the processing steps T1a to T27 of FIG. 11. In FIGs. 7 to 10, the decryption processing is performed on the encrypted control program 91 stored in the non-volatile storage area 131 of the control unit 100, whereas in FIGs. 11 and 12, the decryption processing is performed on the encrypted control program 91 stored in the non-volatile storage area 234 of the security unit 200.

The processing of FIGs. 11 and 12 will be described with the main focus on the difference from the processing of FIGs. 9 and 10. The support device 500 generates the simple encrypted control program 92 and transfers it to the security unit 200 (steps T1a and T5a). The key 93 is stored in the secure chip 205 of the security unit 200 by the dedicated tool 250 (steps T3a, T11 and T13).

Further, in the security unit 200, the simple decryption part 22 and the encryption part 21 generate the encrypted control program 91 by processing the simple encrypted control program 92 from the support device 500 (steps T14a to T14d). The security unit 200 stores the encrypted control program 91 in the non-volatile storage area 234 (step T14e).

After that, the security unit 200 and the control unit 100 perform the decryption processing of the encrypted control program 91 of the non-volatile storage area 234 (steps T17, T19, T25 and T27).

In FIG. 12, the encrypted control program 91 generated by the encryption part 21 may be further stored in the non-volatile storage area 131 of the control unit 100. As a result, the decryption part 23 can set the route for acquiring the encrypted control program 91 to the route of the non-volatile storage area 234 of the security unit 200 or the route of the non-volatile storage area 131 to the control unit 100, and the acquisition routes can be diversified.

In FIGs. 11 and 12, since the control unit 100 does not hold the encrypted control program 91 in the non-volatile storage area 131, even if a third party who stole the control unit 100 can acquire the key 93, the decrypted control program 94 cannot be generated. Further, in the case described in FIGs. 11 and 12 as well, like the case of FIGs. 7 and 8, the decrypted control program 94 can be protected from unauthorized duplication by a third party.

### (f3-1. Restorage)

In the embodiment, the encrypted control program 91 of FIG. 8 held by the support device 500 or the encrypted control program 91 held by the security unit 200 in the non-volatile storage area 234 of FIG. 12 is stored again (restored) in the non-volatile storage area 131 of the control unit 100, whereby the stored encrypted control program 91 can be used as a backup program.

Further, as shown in FIG. 8, the control system 1 may include a route for storing the key 93 (indicated as an "obfuscated key" in FIG. 8) stored in the memory card 215 such as an SD card in the obfuscated state in the secure chip 205. The memory card 215 is owned by an authorized user or a program development company.

### <f4. Configuration of the Control System 1 Independent of the Support Device 500>

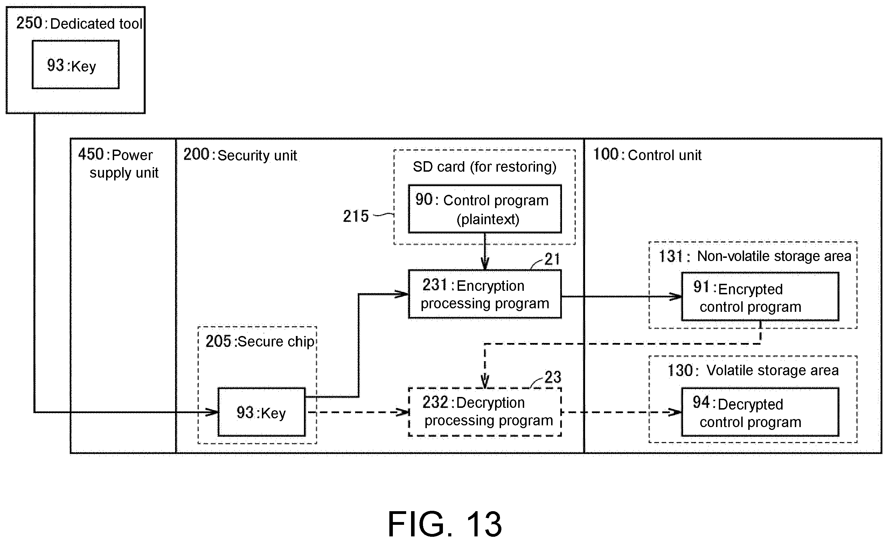

FIG. 13 is a diagram schematically showing a configuration of the control system 1 independent of the support device 500 according to the embodiment. FIG. 13 shows a modified example of the case where the security unit 200 decrypts the encrypted control program 91 stored in the control unit 100.

Unlike the case of FIGs. 8 and 9, the encrypted control program 91 of the control unit 100 of FIG. 13 is generated from the plaintext control program 90 read by the security unit 200 from the memory card 215 such as an SD card by using the key 93 and the encryption processing program 231. The memory card 215 of FIG. 13 is held by an authorized user or a program development company. As a result, in the control system 1 of FIG. 13, the encrypted control program 91 can be restored to the control unit 100 even in an environment in which the support device 500 is not connected.

In FIG. 13, the encrypted control program 91 generated by the encryption part 21 may be further stored in the non-volatile storage area 234 of the security unit 200. As a result, the decryption part 23 can set the route for acquiring the encrypted control program 91 to the route of the non-volatile storage area 234 of the security unit 200 or the route of the non-volatile storage area 131 to the control unit 100, and the acquisition routes can be diversified.

### <G. Flowchart of Startup Processing>

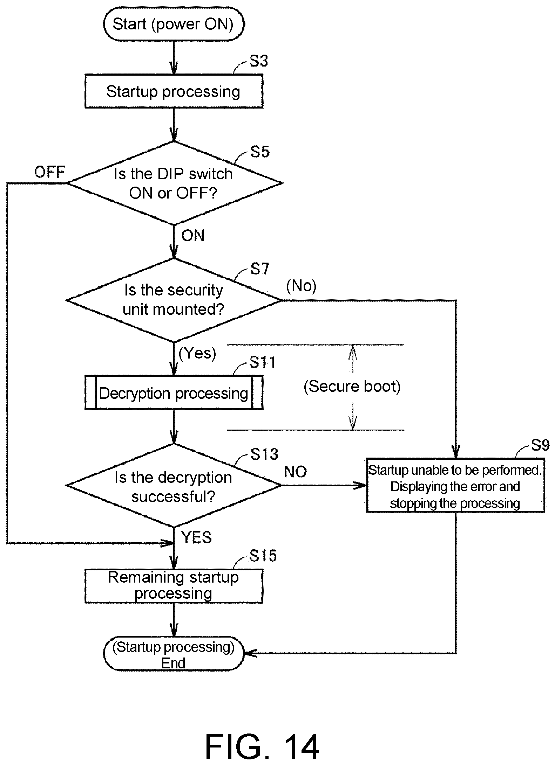

FIG. 14 is a diagram showing an example of a flowchart of the startup processing of the control system 1 according to the embodiment. FIG. 14 illustrates a case where the security unit 200 is configured as a unit detachably attached to the control unit 100. In this case, the control unit 100 connects the security unit 200 via a communication port provided in connection with the communication controller 111. Therefore, the control unit 100 determines whether the security unit 200 is mounted based on a signal from the communication port (or the potential of the communication port).

With reference to FIG. 14, when power is supplied from the power supply unit 450 to each unit of the control system 1 when the program is executed, the processor 102 of the control unit 100 starts normal startup processing (step S3). This startup processing includes, for example, securing resources for executing the user program.

The processor 102 determines whether the DIP switch 126 is in the ON or OFF state based on the signal from the DIP switch 126 (step S5). When it is determined that the signal from the DIP switch 126 indicates ON (ON in step S5), the processor 102 determines whether the security unit 200 is mounted (step S7). When the processor 102 determines that the security unit 200 is mounted on the control unit 100 ((Yes) in step S7), the processor 102 proceeds to the "secure boot mode," and the processor 102 transmits a start request of the decryption processing to the security unit 200. The security unit 200 transmits a response to the start request to the control unit 100, whereby the security unit 200 and the control unit 100 cooperate with each other to perform the decryption processing described in FIGs. 7 to 13 (step S11). When the decryption processing (step S11) ends, the "secure boot mode" ends. In this decryption processing, since the decrypted control program 94 is stored in the non-volatile storage area 131, the control unit 100 can execute the control program.

The processor 102 determines whether the decrypted control program 94 is stored based on the stored contents of the volatile storage area 130, and determines whether the decryption processing is successful based on the determination result (step S13). When it is determined that the encrypted control program 91 has been successfully decrypted, that is, the decrypted control program 94 is stored in the volatile storage area 130 (YES in step S13), the remaining startup processing is executed (step S15). In the remaining startup processing, for example, securing resources for executing the service program 97 or the like is executed. After that, the series of startup processing is completed.

When the processor 102 determines that the security unit 200 is not attached to the control unit 100 in step S7 ((No) in step S7), or when the processor 102 determines that the decrypted control program 94 is not stored in the volatile storage area 130 in step S13 (NO in step S13), the processor 102 lights the indicator 124 and stops the startup processing (step S9). As a result, the control system 1 or the control unit 100 can be notified of an error notification that the control system 1 or the control unit 100 cannot be started.

On the other hand, in step S5, when the processor 102 determines that the signal from the DIP switch 126 indicates OFF (OFF in step S5), the processor 102 proceeds to step S15 without performing the decryption processing in the secure boot mode, and the startup processing (step S15) for the service program 97 is performed. As a result, when the signal from the DIP switch 126 is OFF, the processing for making the control program 90 executable is not performed; that is, the decrypted control program 94 is not stored in the volatile storage area 130. Therefore, the user can protect the decrypted control program 94 from unauthorized duplication by a third party by operating the DIP switch 126.

The embodiments disclosed herein are exemplary and should not be construed restrictive in all aspects. The scope of the disclosure is defined by the claims instead of the above description.

### Description of Reference Numerals

1: Control system; 10: Network; 21: Encryption part; 22: Simple decryption part; 23: Decryption part; 90: control program; 91: Encrypted control program; 92: Simple encrypted control program; 93: Key; 94: Decrypted control program; 95, 223: System program; 97: Service program; 100: Control unit; 102, 202, 502: Processor; 104, 204: Chipset; 106, 206, 504: Primary storage device; 108, 208, 510: Secondary storage device; 110: Field network; 111, 210: Communication controller; 112, 212: Controller; 114, 214: Memory card interface; 115: Memory card; 116, 118, 120, 216, 218: Network controller; 122: Internal bus controller; 124, 224: Indicator; 125: Switch interface; 126: DIP switch; 130: Volatile storage area; 131, 234: Non-volatile storage area; 200: Security unit; 205: Secure chip; 207: Memory; 230: Simple decryption processing program; 231, 5105: Encryption processing program; 232: Decryption processing program; 250: Dedicated tool; 300: Safety unit; 400: Functional unit; 450: Power supply unit; 500: Support device; 506: Input part; 508: Output part; 512: Optical drive; 514: Recording medium; 518: Processor bus; 520: Communication interface; 600: Server device; 700: Gateway; 800: Display device; 900: Control target; 1000: Network environment; 5104: Support program; 5106: Simple encryption processing program.

## Claims

1. A control system (1) comprising:
a control device (100) configured to execute a program (90) related to control of a control target (900); and
a security device (200) capable of communicating with the control device (100),
wherein the security device (200) comprises:
a key storage part (205) configured to store a key (93); and
a decryption part (23) configured to perform decryption processing with the key (93) on an encrypted program (91) generated from encrypting the program (90) with the key (93),
wherein the control device (100) comprises:
a non-volatile storage part (131) configured to store the encrypted program (91);
a volatile storage part (130) configured to store a decrypted program (94) transferred from the security device (200), wherein the security device (200) is adapted to transfer the decrypted control program (94) to the control device (100); and
a DIP switch (126) configured that user can operate to set an ON state or an OFF state,
the control system (1) is **characterized in that**
wherein when the program (90) is executed, the security device (200) is configured to generate the decrypted program (94) by decrypting the encrypted program (91) stored in the control device (100) with the key (93), transfer the decrypted program (94) to the control device (100), the control device (100) is configured to store and execute the decrypted program (94) in the volatile storage part (130),
wherein when the DIP switch (126) is in the ON state, a secure boot mode is set for the control system (1),
wherein in the secure boot mode, the security device (200) is configured to set an environment in which the program (90) can be executed in the control device (100) by performing the decryption processing in cooperation with the control device (100),
wherein when the DIP switch (126) is in the OFF state, the decryption processing is not performed and the decrypted program (94) is not stored in the volatile storage part (130).

2. The control system (1) according to claim 1, wherein the key storage part (205) has a read-protected area (207) in which reading by a device other than the security device (200) is prohibited, and
the key (93) is stored in the read-protected area (207).

3. The control system (1) according to claim 2, wherein the security device (200) or the control device (100) is capable of communicating with an external information processing device (500), and
the information processing device is configured to transfer the encrypted program (91) to the security device (200) or the control device (100).

4. The control system (1) according to claim 2, wherein the security device (200) is capable of communicating with an external information processing device (500), and the security device (200) comprises:
an encryption part (21) configured to generate the encrypted program (91); and
a first decryption part (22) configured to decrypt a program (90) which is transferred from the information processing device and is encrypted with a predetermined key,
wherein after the program (90) encrypted with the predetermined key is decrypted by the first decryption part (22), the encryption part (21) is configured to generate the encrypted program (91) by performing encryption on the program (90) with the key (93) of the key storage part (205).

5. The control system (1) according to claim 4, wherein after the program (90) encrypted with the predetermined key is decrypted by the first decryption part (22), the security device (200) is configured to hold the program (90) until the encryption by the encryption part (21) is completed.

6. The control system (1) according to claim 4 or claim 5, wherein the security device (200) is configured to further store the encrypted program (91) generated by the encryption part (21) in the non-volatile storage part (131) of the security device (200) itself, or transfer the encrypted program (91) to the control device (100).

7. The control system (1) according to any one of claims 1 to 6, wherein the key (93) of the key storage part (205) comprises a private key or a common key.

8. A method of setting security of a program (90) related to control which is executed by a control device (100) that controls a target (900), the control device (100) being capable of communicating with a security device (200), and the method **characterized by** comprising:
when the program (90) is executed,
a step in which the security device (200) performs encryption with a key (93) held by the security device (200) on the program (90) to generate an encrypted program (91) and then stores the encrypted program (91) in a non-volatile storage part (131) provided in the control device;
a step in which the security device (200) performs decryption processing with the key (93) held by the security device (200) on the encrypted program (91) generated from encrypting the program (90) with the key (93) to generate a decrypted program (94) and then transfers the decrypted program (94) to the control device (100); and
a step in which the control device (100) stores the decrypted program (94) that has been transferred from the security device (200) in a volatile storage part (130) provided in the control device (100),
wherein the decryption processing is performed only in a secure boot mode set by user operation,
wherein in the secure boot mode, the security device (200) is adapted to set an environment in which the program (90) can be executed in the control device (100) by performing the decryption processing in cooperation with the control device (100).

## Patentansprüche

1. Steuersystem (1), umfassend:
eine Steuervorrichtung (100), die konfiguriert ist, ein Programm (90) auszuführen, das sich auf die Steuerung eines Steuerziels (900) bezieht; und
eine Sicherheitsvorrichtung (200), die mit der Steuervorrichtung (100) kommunizieren kann,
wobei die Sicherheitsvorrichtung (200) umfasst:
ein Schlüsselspeicherteil (205), das zum Speichern eines Schlüssels (93) konfiguriert ist; und
ein Entschlüsselungsteil (23), das so konfiguriert ist, dass es mit dem Schlüssel (93) eine Entschlüsselungsverarbeitung an einem verschlüsselten Programm (91) durchführt, das durch Verschlüsselung des Programms (90) mit dem Schlüssel (93) erzeugt wurde,
wobei die Steuervorrichtung (100) umfasst:
ein nichtflüchtiges Speicherteil (131), das so konfiguriert ist, dass es das verschlüsselte Programm (91) speichert;
ein flüchtiges Speicherteil (130), das so konfiguriert ist, dass es ein entschlüsseltes Programm (94) speichert, das von der Sicherheitsvorrichtung (200) übertragen wurde, wobei die Sicherheitsvorrichtung (200) angepasst ist, das entschlüsselte Steuerprogramm (94) an die Steuervorrichtung (100) zu übertragen; und
einen DIP-Schalter (126), der so konfiguriert ist, dass der Benutzer ihn betätigen kann, um einen EIN-Zustand oder einen AUS-Zustand einzustellen,
wobei das Steuersystem (1) **dadurch gekennzeichnet ist, dass**
wobei, wenn das Programm (90) ausgeführt wird, die Sicherheitsvorrichtung (200) so konfiguriert ist, dass sie das entschlüsselte Programm (94) erzeugt, indem sie das in der Steuervorrichtung (100) gespeicherte verschlüsselte Programm (91) mit dem Schlüssel (93) entschlüsselt, und das entschlüsselte Programm (94) an die Steuervorrichtung (100) überträgt, wobei die Steuervorrichtung (100) so konfiguriert ist, dass sie das entschlüsselte Programm (94) in dem flüchtigen Speicherteil (130) speichert und ausführt,
wobei, wenn sich der DIP-Schalter (126) im EIN-Zustand befindet, ein sicherer Startmodus für das Steuersystem (1) eingestellt wird,
wobei in dem sicheren Startmodus die Sicherheitsvorrichtung (200) so konfiguriert ist, dass sie eine Umgebung einrichtet, in der das Programm (90) in der Steuervorrichtung (100) ausgeführt werden kann, indem die Entschlüsselungsverarbeitung in Zusammenarbeit mit der Steuervorrichtung (100) durchgeführt wird,
wobei, wenn sich der DIP-Schalter (126) in dem AUS-Zustand befindet, die Entschlüsselungsverarbeitung nicht durchgeführt wird und das entschlüsselte Programm (94) nicht in dem flüchtigen Speicherteil (130) gespeichert wird.

2. Steuersystem (1) nach Anspruch 1, wobei das Schlüsselspeicherteil (205) einen lesegeschützten Bereich (207) aufweist, in dem das Lesen durch eine andere Vorrichtung als die Sicherheitsvorrichtung (200) untersagt ist, und
der Schlüssel (93) in dem lesegeschützten Bereich (207) gespeichert ist.

3. Steuersystem (1) nach Anspruch 2, wobei die Sicherheitsvorrichtung (200) oder die Steuervorrichtung (100) mit einer externen Informationsverarbeitungsvorrichtung (500) kommunizieren kann, und
die Informationsverarbeitungsvorrichtung so konfiguriert ist, dass sie das verschlüsselte Programm (91) an die Sicherheitsvorrichtung (200) oder die Steuervorrichtung (100) überträgt.

4. Steuersystem (1) nach Anspruch 2, wobei die Sicherheitsvorrichtung (200) mit einer externen Informationsverarbeitungsvorrichtung (500) kommunizieren kann und die Sicherheitsvorrichtung (200) umfasst:
ein Verschlüsselungsteil (21), das so konfiguriert ist, dass es das verschlüsselte Programm (91) erzeugt; und
ein erstes Entschlüsselungsteil (22), das so konfiguriert ist, dass es ein Programm (90) entschlüsselt, das von der Informationsverarbeitungsvorrichtung übertragen wird und mit einem vorgegebenen Schlüssel verschlüsselt ist,
wobei, nachdem das mit dem vorgegebenen Schlüssel verschlüsselte Programm (90) durch das erste Entschlüsselungsteil (22) entschlüsselt wurde, das Verschlüsselungsteil (21) so konfiguriert ist, dass es das verschlüsselte Programm (91) erzeugt, indem es das Programm (90) mit dem Schlüssel (93) des Schlüsselspeicherteils (205) verschlüsselt.

5. Steuersystem (1) nach Anspruch 4, wobei, nachdem das mit dem vorgegebenen Schlüssel verschlüsselte Programm (90) durch das erste Entschlüsselungsteil (22) entschlüsselt wurde, die Sicherheitsvorrichtung (200) so konfiguriert ist, dass sie das Programm (90) so lange hält, bis die Verschlüsselung durch das Verschlüsselungsteil (21) abgeschlossen ist.

6. Steuersystem (1) nach Anspruch 4 oder Anspruch 5, wobei die Sicherheitsvorrichtung (200) so konfiguriert ist, dass sie das von dem Verschlüsselungsteil (21) erzeugte verschlüsselte Programm (91) zusätzlich in dem nichtflüchtigen Speicherteil (131) der Sicherheitsvorrichtung (200) selbst speichert oder das verschlüsselte Programm (91) an die Steuervorrichtung (100) überträgt.

7. Steuersystem (1) nach einem der Ansprüche 1 bis 6, wobei der Schlüssel (93) des Schlüsselspeicherteils (205) einen privaten Schlüssel oder einen gemeinsamen Schlüssel umfasst.

8. Verfahren zum Einstellen der Sicherheit eines steuerungsbezogenen Programms (90), das von einer Steuervorrichtung (100) ausgeführt wird, die ein Ziel (900) steuert, wobei die Steuervorrichtung (100) mit einer Sicherheitsvorrichtung (200) kommunizieren kann, und das Verfahren **dadurch gekennzeichnet ist, dass** es umfasst:
wenn das Programm (90) ausgeführt wird,
einen Schritt, bei dem die Sicherheitsvorrichtung (200) das Programm (90) mit einem von der Sicherheitsvorrichtung (200) gehaltenen Schlüssel (93) verschlüsselt, um ein verschlüsseltes Programm (91) zu erzeugen, und anschließend das verschlüsselte Programm (91) in einem in der Steuervorrichtung vorgesehenen nichtflüchtigen Speicherteil (131) speichert;
einen Schritt, bei dem die Sicherheitsvorrichtung (200) eine Entschlüsselungsverarbeitung des verschlüsselten Programms (91), das durch die Verschlüsselung des Programms (90) mit dem Schlüssel (93) erzeugt wurde, mit dem von der Sicherheitsvorrichtung (200) gehaltenen Schlüssel (93) durchführt, um ein entschlüsseltes Programm (94) zu erzeugen, und anschließend das entschlüsselte Programm (94) an die Steuervorrichtung (100) überträgt; und
einen Schritt, bei dem die Steuervorrichtung (100) das von der Sicherheitsvorrichtung (200) übertragene entschlüsselte Programm (94) in ein in der Steuervorrichtung (100) vorgesehenes flüchtiges Speicherteil (130) speichert,
wobei die Entschlüsselungsverarbeitung nur in einem durch eine Benutzerbetätigung eingestellten sicheren Startmodus durchgeführt wird,
wobei in dem sicheren Startmodus die Sicherheitsvorrichtung (200) so angepasst ist, dass sie eine Umgebung einrichtet, in der das Programm (90) in der Steuervorrichtung (100) ausgeführt werden kann, indem die Entschlüsselungsverarbeitung in Zusammenarbeit mit der Steuervorrichtung (100) durchgeführt wird.

## Revendications

1. Système de commande (1) comprenant :
un dispositif de commande (100) configuré pour exécuter un programme (90) lié à la commande d'une cible de commande (900) ; et
un dispositif de sécurité (200) capable de communiquer avec le dispositif de commande (100),
dans lequel le dispositif de sécurité (200) comprend :
une partie de stockage de clé (205) configurée pour stocker une clé (93) ; et
une partie de déchiffrement (23) configurée pour effectuer le traitement de déchiffrement à l'aide de la clé (93) d'un programme chiffré (91) généré à partir du chiffrement du programme (90) avec la clé (93),
dans lequel le dispositif de commande (100) comprend :
une partie de stockage non volatile (131) configurée pour stocker le programme chiffré (91) ;
une partie de stockage volatile (130) configurée pour stocker un programme déchiffré (94) transféré depuis le dispositif de sécurité (200), dans lequel le dispositif de sécurité (200) est adapté pour transférer le programme de commande déchiffré (94) vers le dispositif de commande (100) ; et
un commutateur DIP (126) configuré de manière à ce que l'utilisateur puisse l'actionner pour le mettre en état « ON » ou en état « OFF »,
le système de commande (1) est **caractérisé en ce que**
dans lequel, lorsque le programme (90) est exécuté, le dispositif de sécurité (200) est configuré pour générer le programme déchiffré (94) en décryptant le programme chiffré (91) stocké dans le dispositif de commande (100) à l'aide de la clé (93), puis pour transférer le programme déchiffré (94) vers le dispositif de commande (100), le dispositif de commande (100) est configuré pour stocker et exécuter le programme déchiffré (94) dans la partie de stockage volatile (130),
dans lequel, lorsque le commutateur DIP (126) est à l'état « ON », un mode de démarrage sécurisé est activé pour le système de commande (1),
dans lequel, en mode de démarrage sécurisé, le dispositif de sécurité (200) est configuré pour établir un environnement dans lequel le programme (90) peut être exécuté dans le dispositif de commande (100) en effectuant le traitement de déchiffrement en coopération avec le dispositif de commande (100),
dans lequel, lorsque le commutateur DIP (126) est à l'état « OFF », le traitement de déchiffrement n'est pas effectué et le programme déchiffré (94) n'est pas stocké dans la partie de stockage volatile (130).

2. Système de commande (1) selon la revendication 1, dans lequel la partie de stockage de clés (205) comporte une zone protégée en lecture (207) dans laquelle la lecture par un dispositif autre que le dispositif de sécurité (200) est interdite, et
la clé (93) est stockée dans la zone protégée en lecture (207).

3. Système de commande (1) selon la revendication 2, dans lequel le dispositif de sécurité (200) ou le dispositif de commande (100) est capable de communiquer avec un dispositif externe de traitement de l'information (500), et
le dispositif de traitement de l'information est configuré pour transférer le programme chiffré (91) vers le dispositif de sécurité (200) ou le dispositif de commande (100).

4. Système de commande (1) selon la revendication 2, dans lequel le dispositif de sécurité (200) est capable de communiquer avec un dispositif de traitement d'informations externe (500), et le dispositif de sécurité (200) comprend :
une partie de chiffrement (21) configurée pour générer le programme chiffré (91) ; et
une première partie de déchiffrement (22) configurée pour déchiffrer un programme (90) qui est transféré depuis le dispositif de traitement d'informations et qui est chiffré à l'aide d'une clé prédéterminée,
dans lequel, une fois que le programme (90) chiffré à l'aide de la clé prédéterminée a été déchiffré par la première partie de déchiffrement (22), la partie de chiffrement (21) est configurée pour générer le programme chiffré (91) en effectuant un chiffrement sur le programme (90) à l'aide de la clé (93) de la partie de stockage de clés (205).

5. Système de commande (1) selon la revendication 4, dans lequel, une fois que le programme (90) chiffré à l'aide de la clé prédéterminée a été déchiffré par la première partie de déchiffrement (22), le dispositif de sécurité (200) est configuré pour conserver le programme (90) jusqu'à ce que le chiffrement par la partie de chiffrement (21) soit terminé.

6. Système de commande (1) selon la revendication 4 ou la revendication 5, dans lequel le dispositif de sécurité (200) est configuré pour stocker en outre le programme chiffré (91) généré par la partie de chiffrement (21) dans la partie de stockage non volatile (131) du dispositif de sécurité (200) lui-même, ou pour transférer le programme chiffré (91) vers le dispositif de commande (100).

7. Système de commande (1) selon l'une quelconque des revendications 1 à 6, dans lequel la clé (93) de la partie de stockage de clés (205) comprend une clé privée ou une clé commune.

8. Procédé de configuration de la sécurité d'un programme (90) lié à la commande, qui est exécuté par un dispositif de commande (100) commandant une cible (900), le dispositif de commande (100) étant capable de communiquer avec un dispositif de sécurité (200), le procédé étant **caractérisé en ce qu'**il comprend :
lorsque le programme (90) est exécuté,
une étape dans laquelle le dispositif de sécurité (200) effectue un chiffrement à l'aide d'une clé (93) détenue par le dispositif de sécurité (200) sur le programme (90) afin de générer un programme chiffré (91), puis stocke le programme chiffré (91) dans une partie de stockage non volatile (131) prévue dans le dispositif de commande ;
une étape dans laquelle le dispositif de sécurité (200) effectue un traitement de déchiffrement à l'aide de la clé (93) détenue par le dispositif de sécurité (200) sur le programme chiffré (91) généré à partir du chiffrement du programme (90) avec la clé (93) afin de générer un programme déchiffré (94), puis transfère le programme déchiffré (94) vers le dispositif de commande (100) ; et
une étape dans laquelle le dispositif de commande (100) stocke le programme déchiffré (94) qui a été transféré depuis le dispositif de sécurité (200) dans une partie de stockage volatile (130) prévue dans le dispositif de commande (100),
dans lequel le traitement de déchiffrement est effectué uniquement dans un mode de démarrage sécurisé défini par une opération de l'utilisateur,
dans lequel, dans le mode de démarrage sécurisé, le dispositif de sécurité (200) est adapté à mettre en place un environnement dans lequel le programme (90) peut être exécuté dans le dispositif de commande (100) en effectuant le traitement de déchiffrement en coopération avec le dispositif de commande (100).
